# FASCICULE DE BREVET EUROPEEN

(11) **EP 1 682 287 B1**
(45) Date de publication et mention de la délivrance du brevet: **20.06.2012**
(21) Numéro de dépôt: 04805425.8
(22) Date de dépôt: 09.11.2004
(51) Int. Cl.: B08B 9/02, C02F 1/32, B08B 1/00

(54) **Dispositif de nettoyage des gaines de protection des lampes uv d'un dispositif de desinfection d'eau**
Vorrichtung zur Reinigung von Schutzhüllen von UV-Lampen einer Vorrichtung zur Desinfizierung von Wasser
Device for cleaning protective sheaths of uv lamps of a device for disinfecting water

(30) Priorité: 12.11.2003 FR 0313262
(43) Date de publication de la demande: 26.07.2006
(73) Titulaire: Veolia Water Solutions & Technologies Support, 94410 Saint-Maurice (FR)
(72) Inventeur: GIRODET, Pierre, F-92600 Asniere (FR); VANPEENE, Christian, F-94800 Villejuif (FR)
(74) Mandataire: Larcher, Dominique
(86) Numéro de dépôt international: PCT/FR2004/002882
(87) Numéro de publication internationale: WO 2005/046893

(56) Documents cités:
- EP-A- 1 371 611
- US-A- 5 440 131
- US-A- 5 874 740
- US-B1- 6 646 269
- US-B2- 6 432 213

## Description

L'invention concerne le domaine du traitement des eaux en vue de leur désinfection, tant dans le cadre de procédé d'épuration que de procédé de potabilisation.

Plus précisément, l'invention concerne la désinfection des eaux par rayonnement ultraviolet. L'invention s'applique à des dispositifs de désinfection d'eau installés tant dans un chenal ouvert qu'au sein d'un réacteur fermé.

Selon une telle technique, l'eau à désinfecter transite dans un chenal ou un réacteur à l'intérieur duquel sont disposés un ou plusieurs bancs de lampes dispensant un rayonnement ultraviolet d'une longueur d'ondes comprise entre 180 nm et 400 nm, ces bancs étant organisés en modules verticaux parallèles entre eux, chaque module étant constitué d'une ou plusieurs séries verticales de lampes UV protégées par des gaines en quartz.

Ces bancs de lampes sont disposés dans le chenal ou dans le réacteur de façon telle que l'ensemble des lampes soit immergé. Chaque module est maintenu en place grâce à une poutre pourvue de supports accueillant les lampes dans leur gaine transparente aux UV.

Dans le cas d'un chenal, les lampes sont disposées de façon telle que leur axe longitudinal soit essentiellement parallèle à la direction d'écoulement de l'eau, ceci pour que l'eau soit en contact le plus longtemps possible avec le rayonnement désinfectant Les chenaux de désinfection d'eau sont ainsi équipés de plusieurs bancs de lampes disposés dans le chenal les uns à la suite des autres.

Cette technique de désinfection par rayonnement ultraviolet existe depuis une vingtaine d'années. Au fur et à mesure de l'évolution de la technique, les lampes UV ont présenté une puissance de plus en plus grande, notamment grâce à la technologie des lampes UV basse pression, permettant à chaque banc de lampes de traiter une quantité d'eau de plus en plus importante.

Or, en particulier lorsque les eaux traitées sont constituées par des eaux usées, un dépôt plus ou moins important se forme sur les gaines de protection des lampes UV, nuisant progressivement à la transmission du rayonnement ultraviolet. Cet encrassement naturel est plus ou moins rapide selon la qualité de l'eau et la maintenance effectuée sur les bancs du dispositif de désinfection.

Aussi, il est maintenant courant d'équiper les dispositifs d'eau par rayonnement ultraviolet de moyens de nettoyage de ces gaines de protection.

Selon les techniques connues, le nettoyage des gaines de protection est obtenu de l'une des façons suivantes :
- nettoyage mécanique, à l'aide de racleurs automatisés ou manuels qui effectuent un mouvement de va-et-vient le long des gaines ;
- nettoyage par un procédé chimique ;
- nettoyage mixte mécanique/chimique.

L'invention concerne particulièrement le nettoyage mettant en oeuvre des racleurs, en particulier des racleurs automatisés.

Actuellement, les solutions connues de raclage consistent à mettre en oeuvre un ensemble mécanique portant une surface frottante qui entoure la gaine de protection, l'ensemble mécanique étant couplé à des moyens d'entraînement en coulissement le long des gaines.

Parmi les ensembles mécaniques connus, on connaît ceux dans lesquels la surface frottante est obtenue à l'aide de plusieurs bagues, dont l'une au moins est élastique de façon à exercer une pression suffisante sur la gaine pour la racler, ce système de bagues étant conçu pour tolérer certaines variations de diamètres.

En effet, les dimensions des bagues doivent être adaptées assez précisément au diamètre des gaines de protection, ceci en vue de produire un effort de raclage suffisamment important.

Or, les gaines de protection sont réalisées avec des tolérances dimensionnelles qui entraînent le fait que, pour un même diamètre de bague, l'effort de raclage n'est plus suffisant pour produire le nettoyage souhaité, ceci dans le cas d'une diminution du diamètre de la gaine de protection.

De plus, au fur et à mesure de l'usure normale de la surface frottante. l'effort de raclage diminue.

Bien entendu, ceci n'est pas souhaitable dans la mesure où, comme déjà mentionné précédemment, un mauvais nettoyage nuit à la transmission du rayonnement ultraviolet. Un effort de raclage insuffisant dû à un mauvais rapport dimensionnel entre les bagues de raclage et les gaines peut donc se répercuter sur l'efficacité globale de l'installation de désinfection.

Par ailleurs, il est nécessaire d'assurer un guidage à la fois précis et souple des moyens de raclage le long des gaines de protection.

En effet, l'alignement des lampes entre elles est rarement parfait et il faut donc adapter l'orientation des moyens de raclage au fur et à mesure de leurs déplacements, leur trajectoire étant imposée par les différentes orientations des lampes.

Dans les dispositifs de nettoyage connus, selon lesquels plusieurs bagues sont mises en oeuvre tel que mentionné précédemment, les fonctions essentielles au bon fonctionnement du dispositif sont réparties notamment sur les différentes bagues.

On distingue ainsi, suivant les modes de réalisation, la bague de frottement et de compensation de variation de diamètre des gaines et la bague pour la compensation des défauts d'alignement des gaines entre elles.

Ces bagues sont maintenues à l'aide d'une enveloppe qui les relie à un support porté par un bras d'entraînement. Le support peut être un cavalier entourant l'enveloppe des bagues en serrant celle-ci de façon à pouvoir l'entraîner le long de la gaine. On comprend donc que le cavalier est relié à des moyens moteurs par l'intermédiaire de fixations au bras d'entraînement.

Bien entendu, ce bras porte autant de supports qu'il y a de lampes à la verticale les unes des autres. En pratique, le bras s'étend entre deux colonnes de lampes UV et il porte des supports pour les deux colonnes de lampes.

Cette solution implique de nombreuses étapes de fabrication et de montage. En effet, les bras d'entraînement peuvent nécessiter des étapes d'assemblage, les supports sont réalisés par moulage et il faut enfin solidariser les supports au bras d'entraînement, par soudage ou le plus souvent par vissage.

De plus, il est fréquent de compter 4 à 18 lampes UV par module, un banc pouvant pour sa part comprendre jusqu'à 10 modules. Bien entendu, une installation de désinfection d'eau par rayonnement UV comporte plusieurs bancs.

On comprend donc que le nombre de supports à visser sur les bras d'entraînement s'avère souvent considérable. Les temps de montage et les coûts de main-d'oeuvre pour l'installation de ces dispositifs de nettoyage sont donc très importants.

L'invention a notamment pour objectif de pallier les inconvénients de l'art antérieur.

Plus précisément, l'invention a pour objectif de proposer un dispositif de désinfection d'eau par rayonnement ultraviolet dans lequel les moyens de nettoyage des gaines de protection des lampes UV sont moins coûteux à réaliser et à installer que ceux de l'art antérieur.

L'invention a également pour objectif de conserver les avantages des solutions existantes, et notamment :
- fournir des moyens de nettoyage assurant un effort de raclage sensiblement constant, quelles que soient les variations de diamètre des gaines de protection ou l'usure des bagues de raclage ;
- fournir des moyens de nettoyage qui permettent de compenser les défauts d'orientation des gaines entre elles.

Un autre objectif de l'invention est de fournir un tel dispositif dans lequel les moyens de nettoyage sont simples de conception et faciles à mettre en oeuvre.

Ces objectifs, ainsi que d'autres qui apparaîtront par la suite, sont atteints grâce à l'invention qui a pour objet un dispositif de désinfection d'eau par rayonnement UV incluant une pluralité de lampes UV chacune protégée par au moins une gaine en matériau transparent aux UV de forme sensiblement cylindrique, ledit dispositif comprenant des moyens de nettoyage desdites gaines incluant au moins une bague de raclage entourant chaque gaine et étant susceptible d'être entraînée en coulissement le long de ladite gaine à l'aide de moyens moteurs, lesdites bagues de raclage étant montées sur au moins un ensemble d'entraînement comprenant des moyens supports portés par au moins un bras d'entraînement relié auxdits moyens moteurs, lesdits moyens supports de chaque bague de raclage comprenant au moins un anneau fermé à l'intérieur duquel est montée ladite bague de raclage et en ce que lesdits moyens supports forment avec ledit ou lesdits bras d'entraînement un ensemble d'entraînement monobloc.

On obtient de cette façon un dispositif de nettoyage de gaines de lampes UV avantageux à plusieurs titres.

En premier lieu, les moyens supports constitués sous forme d'anneau fermé forment des moyens de coopération particulièrement simples et efficaces avec les bagues de raclage.

Comme cela va apparaître clairement par la suite, les bagues de raclage peuvent être montées directement dans les anneaux, sans qu'il soit nécessaire de recourir aux enveloppes de bagues selon les solutions de l'art antérieur.

En second lieu, l'ensemble d'entraînement des bagues de raclage est réalisé sous forme monobloc (d'une seule pièce, sans assemblage). On supprime donc les temps de montage très longs qui étaient nécessaires pour le montage des supports, un par un, avec les solutions classiques.

Les interventions humaines sont largement diminuées en évitant la mise en oeuvre de moyens de fixation (par vissage ou soudage).

Les coûts de main d'oeuvre sont par conséquent réduits. Le nombre de pièces est également réduit. En particulier, le coût de la quincaillerie (vis) est supprimé.

En outre, la logistique est largement simplifiée, le nombre de pièces circulant non stockées étant considérablement limité.

Des gains notables peuvent donc être envisagés au moment de la fabrication, de l'assemblage et du montage du dispositif.

Selon une solution avantageuse, lesdites bagues de raclage présentent une fente permettant de faire varier leur géométrie.

On obtient ainsi un raclage continu sur toute la longueur des gaines de protection et un effort de raclage constant, ou quasiment, ceci quelles que soient les variations de tolérances du diamètre des gaines, ou quel que soit le degré d'usure (apparaissant normalement du fait des frottements) des moyens de raclage.

La qualité du nettoyage des gaines est par conséquent obtenue avec une qualité tout à fait comparable à celle des solutions antérieures.

Selon une solution préférée, lesdites bagues de raclage présentent une gorge périphérique externe formant logement pour un anneau desdits moyens supports.

Ainsi, le maintien des bagues de raclage à l'intérieur des anneaux de l'ensemble d'entraînement est obtenu de façon efficace.

De plus, le montage des bagues dans leur anneau s'effectue très simplement et rapidement : il suffit de « pincer » la bague de façon à rapprocher les bords de la fente qu'elle présente.

La bague est alors déformée de façon à ce que son diamètre externe lui permette d'être inséré dans un anneau de l'ensemble d'entraînement. En relachant la bague, celle-ci reprend sa forme initiale de telle sorte que l'anneau s'insère dans la gorge de la bague.

Le montage d'une bague s'effectue en quelques secondes.

Selon une solution préférée, chacune desdites bagues de raclage coopère avec des moyens de rappel élastiques tendant à resserrer ladite bague sur ladite gaine.

On obtient ainsi un moyen simple, efficace et facile à mettre en oeuvre pour faire varier la géométrie des moyens de raclage en fonction de la géométrie de la section des gaines de protection.

Selon une solution avantageuse, lesdits moyens de rappel élastiques comprennent au moins un ressort annulaire.

De tels moyens de rappel élastiques s'avèrent particulièrement peu coûteux à réaliser et à mettre en oeuvre.

Selon un premier mode de réalisation préféré, lesdits moyens de rappel élastiques sont logés dans ladite gorge périphérique externe de ladite bague.

La mise en place des moyens de rappel élastiques est effectuée aisément. Leur maintien est assuré efficacement, notamment dans le cas où ces moyens de rappel sont constitués par un ressort annulaire dont la forme est particulièrement adaptée à celle de la gorge.

Selon un deuxième mode de réalisation, lesdits moyens de rappel élastiques sont noyés dans ladite bague.

On obtient alors une pièce certes plus chère à réaliser, mais aussi qui peut être plus facilement et plus rapidement installée.

On obtient donc un montage particulièrement simple et efficace, sans qu'il soit nécessaire de prévoir de pièces de liaison spécifiques.

Selon l'un ou l'autre de ces modes de réalisation, ladite gorge périphérique est dimensionnée de telle sorte qu'un jeu soit ménagé entre ledit support et les flans intérieurs de ladite gorge.

De cette façon, le dispositif de nettoyage est prévu pour compenser automatiquement les légères variations d'orientation que peuvent présenter les gaines de protection.

Cette compensation est donc obtenue grâce seulement au jeu entre la bague et son support.

Selon une autre caractéristique avantageuse, ladite gorge périphérique est dimensionnée en profondeur de telle sorte qu'un jeu annulaire soit ménagé entre ledit anneau d'une part, et le fond de ladite gorge et/ou lesdits moyens de rappel élastiques, d'autre part.

Grâce à ces jeux, on obtient un moyen simple pour obtenir deux degrés de liberté entre la bague et son support.

Préférentiellement, ledit ou lesdits ensembles d'entraînement comprennent chacun au moins deux bras d'entraînement entre lesquels s'étendent une pluralité d'anneaux disposés transversalement au moins par deux entre lesdits bras.

L'ensemble d'entraînement selon l'invention peut donc être obtenu à partir d'une simple plaque, par des techniques automatisables tel que cela va apparaître par la suite.

L'invention concerne également un élément d'entraînement tel que décrit précédemment, destiné à équiper un dispositif de désinfection d'eau par rayonnement UV.

L'invention concerne aussi un procédé de fabrication d'un élément d'entraînement tel que décrit précédemment.

Avantageusement, ladite étape de fabrication d'un tel procédé est réalisée à l'aide de l'une au moins des techniques suivantes :
- découpe ;
- moulage ;
- pliage ;
- emboutissage ;
- thermoformage.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 illustrent schématiquement un dispositif de désinfection d'eau par rayonnement ultraviolet ;
- la figure 3 est une vue en coupe des moyens de raclage ;
- la figure 4 est une vue de face des moyens de raclage ;
- la figure 5 est une vue de dessus des moyens de raclage ;
- les figures 6 et 7 sont des vues respectivement de face et en perspective d'un ensemble d'entraînement d'un dispositif de nettoyage selon l'invention.

Tel que mentionné précédemment, le dispositif selon l'invention est destiné à équiper une installation de désinfection d'eau par rayonnement UV.

On rappelle qu'un dispositif de désinfection de ce type est constitué par l'association de plusieurs modules (en l'occurrence six) de désinfection disposés parallèle entre eux. Une telle association de modules de désinfection est classiquement désignée par le terme « banc » par l'homme de l'art.

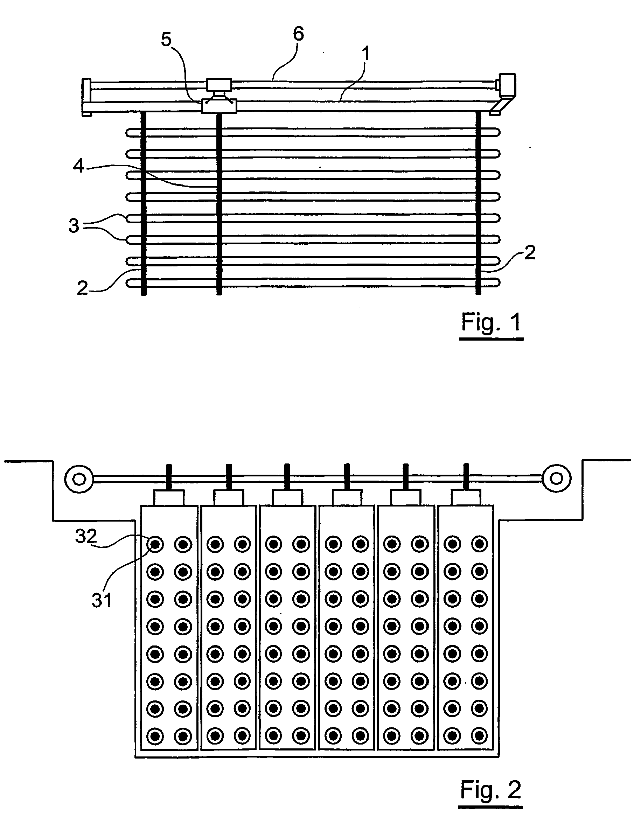

Selon un mode de réalisation particulier illustré par les figures 1 et 2, chaque module est constitué par une poutre 1 à laquelle sont reliés des supports 2 (deux supports par poutre) portant deux séries verticales de moyens formant lampe 3 (on note qu'on entend par « moyens formant lampe » l'ensemble formé par la lampe UV 31, par sa gaine de protection 32 en matériau transparent aux rayonnements ultraviolets, généralement en quartz, et par des connecteurs à leurs extrémités amont et aval).

Tel qu'illustré par la figure 1, chaque module comprend également des ensembles d'entraînement 4 montés sur un chariot 5. Ces moyens d'entraînement 4 sont destinés à faire coulisser sur les moyens formant lampe 3 selon une course correspondant à la longueur des lampes UV.

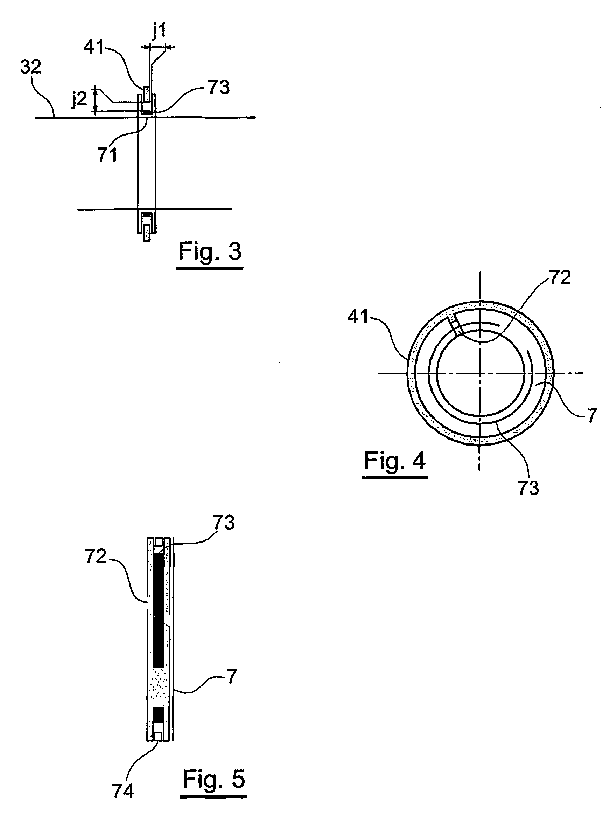

En référence aux figures 3 à 5, ces moyens de nettoyage comprennent une bague 7 présentant une surface frottante 71 destinée à être coulissée le long d'une gaine de protection 32 en raclant celle-ci.

Selon, le présent mode de réalisation, la bague 7 est une bague ouverte dans la mesure où elle présente une fente 72. Cette fente permet de rendre variable l'espace délimité par la bague.

De cette façon, la géométrie de la surface frottante 71 peut varier en fonction de la géométrie de la section de la gaine de protection 32.

Tel qu'illustré par les figures 3 à 5, la bague ouverte 7 coopère avec des moyens de rappel élastiques constitués par un ressort annulaire 73 qui tend à resserrer la bague 7 sur la gaine de protection 32.

Bien entendu, la raideur de ce ressort annulaire pourra varier selon différents modes de réalisation envisageables. Cette raideur sera de préférence prévue pour assurer le serrage de la bague sur la gaine, tout en autorisant une « ouverture » de la bague dans le cas d'un effort de raclage trop important.

Ce ressort annulaire 73 est logé dans une gorge 74 ménagée à la périphérie de la bague ouverte 7.

Un tel ressort annulaire est ici une bague métallique ouverte, mais pourrait de façon similaire, être une bague réalisée en une matière élastique, ou encore être un ressort hélicoïdal selon d'autres modes de réalisation envisageables.

On note que, selon un autre mode de réalisation envisageable, le ressort annulaire 73 pourrait être noyé dans la matière de la bague ouverte 7.

Par ailleurs, les bagues 7 sont montées sur ensembles d'entraînement 4 dans des anneaux 41 qui entourent chaque bague 7 en pénétrant la gorge périphérique 74 de celles-ci. Ces ensembles d'entraînement sont décrits plus en détails par la suite.

De façon à assurer deux degrés de liberté axiaux entre une bague et l'anneau 41 correspondant, la gorge périphérique 74 des bagues 7 est dimensionnée de façon à ménager :
- un jeu J1 entre l'anneau 41 et les flans intérieurs de la gorge 74 ;
- un jeu J2 entre l'anneau et le ressort annulaire 73 placé au fond de la gorge périphérique 74.

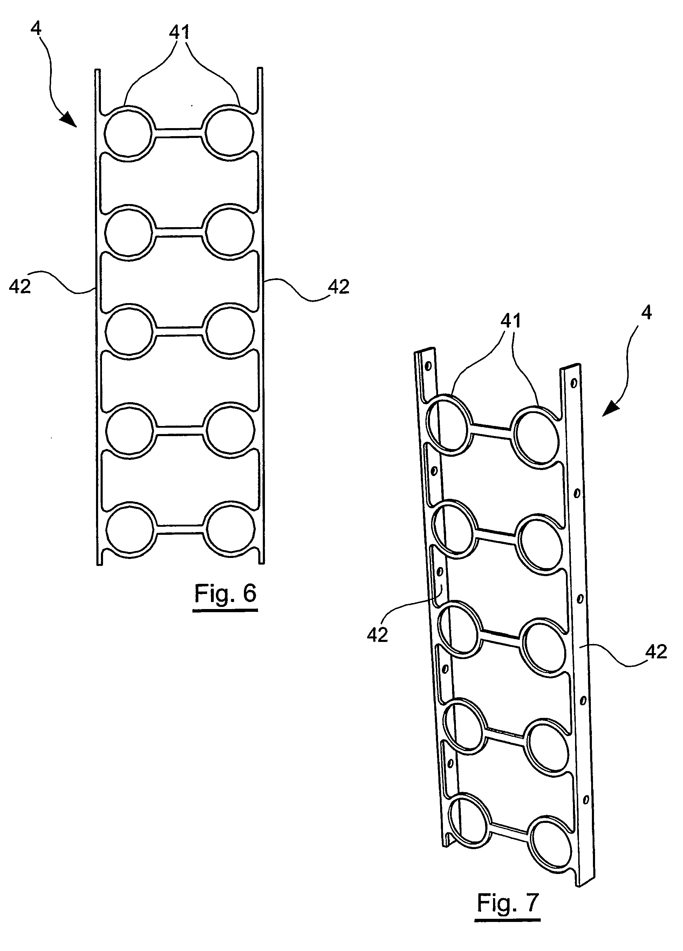

En référence aux figures 6 et 7, un ensemble d'entraînement 4 comprend, selon le présent mode de réalisation, deux bras d'entraînement 42 montés sur un chariot moteur 5, et une série d'anneaux 41 à l'intérieur desquels on vient monter les bagues 7. Tel que cela apparaît, les anneaux 41 sont disposés par paires entre les bras 42.

Un tel ensemble d'entraînement 4 est réalisé en procédant à une série de découpes (préférentiellement par une technique de découpes laser) dans une plaque d'un matériau inoxydable, en l'occurrence un alliage d'acier 316L d'une épaisseur de 2 mm.

On note que cet ensemble pourra âtre réalisé dans tout autre matériau inoxydable, par exemple un matériau composite, dans d'autres modes de réalisation envisageables.

Après avoir procédé à la phase de découpes, on obtient un ensemble monobloc comprenant les bras 42 et les anneaux 41. Cet ensemble est ensuite ébavuré puis soumis à un pliage réalisé de telle sorte que les bras 42 présentent, sur toute leur longueur, un angle droit (ceci tendant à rigidifier l'ensemble d'entraînement).

Les découpes sont en l'occurrence réalisées par un dispositif de découpe au laser. Un tel dispositif permet d'assurer une précision satisfaisante (un dispositif de découpe au jet d'eau pourrait être envisagé).

Préférentiellement, la phase de découpe au laser est automatisée. La pièce est ensuite pliée pour obtenir les deux bras 42, tels qu'ils apparaissent sur la figure 7. Les moyens d'entraînement sont ainsi obtenus rapidement et avec un minimum de main d'oeuvre (ce qui réduit évidemment le coût des pièces).

Une fois cet ensemble d'entraînement obtenu, on vient monter dans les anneaux les bagues de raclage, puis on solidarise l'ensemble à un chariot moteur avant d'installer le tout sur des moyens de guidage en translation du chariot le long des lampes UV d'un dispositif de désinfection d'eau.

Comme déjà indiqué, le montage des bagues est réalisé en déformant la bague de telle sorte que son diamètre externe lui permette d'être inséré dans un anneau de l'ensemble d'entraînement. En relâchant la bague, celle-ci reprend sa forme initiale de telle sorte que l'anneau s'insère dans la gorge de la bague.

## Revendications

1. Dispositif de désinfection d'eau par rayonnement UV incluant une pluralité de lampes UV (31) chacune protégée par au moins une gaine (32) en matériau transparent aux UV de forme sensiblement cylindrique, ledit dispositif comprenant des moyens de nettoyage desdites gaines incluant au moins une bague de raclage (7) entourant chaque gaine (32) et étant susceptible d'être entraînée en coulissement le long de ladite gaine (32) à l'aide de moyens moteurs (5), lesdites bagues de raclage (7) étant montées sur au moins un ensemble d'entraînement comprenant des moyens supports (41) portés par au moins un bras d'entraînement (42) relié auxdits moyens moteurs (5),
**caractérisé en ce que** lesdits moyens supports (41) de chaque bague de raclage (7) comprennent au moins un anneau fermé à l'intérieur duquel est montée ladite bague de raclage (7), **en ce que** lesdits moyens supports (41) forment avec ledit ou lesdits bras d'entraînement (42) un ensemble d'entraînement monobloc et **en ce que** lesdites bagues de raclage (7) présentent une fente (72) permettant de faire varier leur géométrie.

2. Dispositif de désinfection d'eau par rayonnement UV selon la revendication 1, **caractérisé en ce que** lesdites bagues de raclage (7) présentent une gorge périphérique (74) externe formant logement pour un anneau desdits moyens supports (41).

3. Dispositif de désinfection d'eau par rayonnement UV selon l'une quelconque des revendication 1 et 2 , **caractérisé en ce que** chacune desdites bagues de raclage (7) coopèrent avec des moyens de rappel élastiques (73) tendant à resserrer ladite bague (7) sur ladite gaine (32).

4. Dispositif de désinfection d'eau par rayonnement UV selon la revendication 3, **caractérisé en ce que** lesdits moyens de rappel élastiques (73) comprennent au moins un ressort annulaire.

5. Dispositif de désinfection d'eau par rayonnement UV selon l'une des revendications 3 et 4, **caractérisé en ce que** lesdits moyens de rappel élastiques (73) sont logés dans ladite gorge périphérique (74) externe de ladite bague (7).

6. Dispositif de désinfection d'eau par rayonnement UV selon l'une des revendications 3 et 4, **caractérisé en ce que** lesdits moyens de rappel élastiques (73) sont noyés dans ladite bague (7).

7. Dispositif de désinfection d'eau par rayonnement UV selon l'une quelconque des revendications 2 à 6, **caractérisé en ce que** ladite gorge périphérique (74) et/ou ledit anneau sont dimensionnés l'un par rapport à l'autre de telle sorte qu'un jeu soit ménagé entre le support (41) et les flans intérieurs de ladite gorge périphérique (74).

8. Dispositif de désinfection d'eau par rayonnement UV selon l'une quelconque des revendications 2 à 6, **caractérisé en ce que** ladite gorge (74) est dimensionnée en profondeur de telle sorte qu'un jeu annulaire soit ménagé entre ledit anneau d'une part, et le fond de ladite gorge (74) et/ou lesdits moyens de rappel élastiques (73) d'autre part.

9. Dispositif de désinfection d'eau par rayonnement UV selon l'une quelconque des revendications 1 à 8, **caractérisé en ce que** ledit ou lesdits ensembles d'entraînement comprennent chacun au moins deux bras (42) d'entraînement entre lesquels s'étendent une pluralité d'anneaux disposés transversalement au moins par deux entre lesdits bras (42).

10. Élément d'entraînement destiné à équiper un dispositif de désinfection d'eau par rayonnement UV incluant une pluralité de lampes UV (31) chacune protégée par au moins une gaine (32) en matériau transparent aux UV de forme sensiblement cylindrique, ledit dispositif comprenant des moyens de nettoyage desdites gaines incluant au moins une bague de raclage (7) entourant chaque gaine (32) et présentant une fente (72) permettant de faire varier sa géométrie, ledit élément d'entraînement étant destiné à entraîner en coulissement ladite ou lesdites bagues (7) le long de ladite gaine (32) à l'aide de moyens moteurs (5), **caractérisé en ce qu'**il est formé sous forme d'un ensemble monobloc incluant :
- des moyens supports (41) de chacune desdites bagues de raclage (7), comprenant au moins un anneau fermé à l'intérieur duquel est montée ladite bague de raclage (7) ;
- au moins un bras d'entraînement (42) reliant lesdits moyens supports auxdits moyens moteurs (5).

11. Procédé de fabrication d'un élément d'entraînement destiné à équiper un dispositif de désinfection d'eau par rayonnement UV incluant une pluralité de lampes UV (31) chacune protégée par au moins une gaine (32) en matériau transparent aux UV de forme sensiblement cylindrique, ledit dispositif comprenant des moyens de nettoyage desdites gaines (32) incluant au moins une bague de raclage (7) entourant chaque gaine (32) et présentant une fente (72) permettant de faire varier sa géométrie, ledit élément d'entraînement étant destiné à entraîner en coulissement ladite ou lesdites bagues (7) le long de ladite gaine (32) à l'aide de moyens moteurs (5), **caractérisé en ce qu'**il comprend au moins une étape de fabrication d'un ensemble monobloc incluant :
- des moyens supports (41) de chacune desdites bagues de raclage (7) comprenant au moins un anneau fermé à l'intérieur duquel est montée ladite bague de raclage (7). ;
- au moins un bras d'entraînement (42) destiné à relier lesdits moyens supports (41) auxdits moyens moteurs (5),
ladite étape de fabrication étant réalisée à l'aide de l'une au moins des techniques suivantes :
- découpe ;
- moulage ;
- pliage ;
- emboutissage ;
- thermoformage.

## Claims

1. Device for disinfection of water by UV radiation, including a plurality of UV lamps (31) each of which is protected by at least one sheath (32) made of material which is transparent to the UVs, and has a substantially cylindrical form, the said device comprising means for cleaning the said sheaths including at least one scraper ring (7) which surrounds each sheath (32) and can be slid along the said sheath (32) by means of drive means (5), the said scraper rings (7) being fitted on at least one drive assembly comprising support means (41) which are supported by at least one drive arm (42) which is connected to the said drive means (5),
**characterised in that** the said support means (41) of each scraper ring comprise at least one closed ring, in the interior of which the said scraper ring (7) is fitted, **in that** the said support means (41) form together with the said drive arm(s) (42) a drive assembly in a single piece, and **in that** the said scraper rings (7) have a slot (72) which makes it possible to vary their geometry.

2. Device for disinfection of water by UV radiation according to claim 1, **characterised in that** the said scraper rings (7) have an outer peripheral groove (74) which forms a receptacle for a ring of the said support means (41).

3. Device for disinfection of water by UV radiation according to either of claims 1 and 2, **characterised in that** each of the said scraper rings (7) co-operates with resilient return means (73) which tend to clamp the said ring (7) on the said sheath (32).

4. Device for disinfection of water by UV radiation according to claim 3, **characterised in that** the said resilient return means (73) comprise at least one annular spring.

5. Device for disinfection of water by UV radiation according to one of claims 3 and 4, **characterised in that** the said resilient return means (73) are accommodated in the said outer peripheral groove (74) in the said ring (7).

6. Device for disinfection of water by UV radiation according to one of claims 3 and 4, **characterised in that** the said resilient return means (73) are embedded in the said ring (7).

7. Device for disinfection of water by UV radiation according to any one of claims 2 to 6, **characterised in that** the said peripheral groove (74) and/or the said ring have dimensions relative to one another such that play is provided between the support (41) and the inner panels of the said peripheral groove (74).

8. Device for disinfection of water by UV radiation according to any one of claims 2 to 6, **characterised in that** the depth of the said groove (74) has dimensions such that annular play is provided between the said ring on the one hand, and the base of the said groove (74) and/or the said resilient return means (73) on the other hand.

9. Device for disinfection of water by UV radiation according to any one of claims 1 to 8, **characterised in that** the said drive assembly/assemblies each comprise(s) at least two drive arms (42), between which a plurality of rings extend which are disposed transversely at least in pairs between the said arms (42).

10. Drive element which is designed to equip a device for disinfection of water by UV radiation including a plurality of UV lamps (31), each protected by at least one sheath (32) made of material which is transparent to the UVs, and has a substantially cylindrical form, the said device comprising means for cleaning the said sheaths including at least one scraper ring (7) which surrounds each sheath (32) and has a slot (72) which makes it possible to vary the geometry of the sheath, the said drive element being designed to slide the said ring(s) (7) along the said sheath (32) by means of drive means (5), **characterised in that** it is made in the form of an assembly in a single piece including:
- support means (41) for each of the said scraper rings (7), comprising at least one closed ring inside which the said scraper ring (7) is fitted;
- at least one drive arm (42) which connects the said support means to the said drive means (5).

11. Method for production of a drive element which is designed to equip a device for disinfection of water by UV radiation including a plurality of UV lamps (31), each protected by at least one sheath (32) made of material which is transparent to the UVs, and has a substantially cylindrical form, the said device comprising means for cleaning the said sheaths (32) including at least one scraper ring (7) which surrounds each sheath (32) and has a slot (72) which makes it possible to vary the geometry of the sheath, the said drive element being designed to slide the said ring(s) (7) along the said sheath (32) by means of drive means (5), **characterised in that** it comprises at least one step for production of an assembly in a single piece including:
- support means (41) for each of the said scraper rings (7) comprising at least one closed ring inside which the said scraper ring (7) is fitted;
- at least one drive arm (42) which is designed to connect the said support means (41) to the said drive means (5),
the said production step being carried out by means of at least one of the following techniques:
- cutting out;
- moulding;
- bending;
- drawing;
- thermoforming.

## Patentansprüche

1. Vorrichtung zur Desinfektion von Wasser durch UV-Strahlung, die mehrere UV-Lampen (31) aufweist, welche jeweils durch mindestens eine Hülle (32) aus UV-durchlässigem Material von im Wesentlichen zylindrischer Form geschützt sind, wobei die Vorrichtung Mittel zur Reinigung der Hüllen umfasst, die mindestens einen Abstreifring (7) aufweisen, der die jeweilige Hülle (32) umgibt und mit Hilfe motorischer Mittel (5) entlang der Hülle (32) gleitend antreibbar ist, wobei die Abstreifringe (7) auf mindestens einer Antriebseinheit angebracht sind, die Haltemittel (41) umfasst, die von mindestens einem Antriebsarm (42) getragen werden, der mit den motorischen Mitteln (5) verbunden ist,
**dadurch gekennzeichnet, dass** die Haltemittel (41) jedes Abstreifrings (7) mindestens einen geschlossenen Ring umfassen, in dessen Innerem der Abstreifring (7) angebracht ist, dadurch, dass die Haltemittel (41) mit dem oder den Antriebsarmen (42) eine einstückige Antriebseinheit bilden, und dadurch, dass die Abstreifringe (7) einen Spalt (72) aufweisen, der es ermöglicht, ihre Geometrie zu verändern.

2. Vorrichtung zur Desinfektion von Wasser durch UV-Strahlung nach Anspruch 1, **dadurch gekennzeichnet, dass** die Abstreifringe (7) eine äußere Umfangsnut (74) aufweisen, die eine Aufnahme für einen Ring der Haltemittel (41) bildet.

3. Vorrichtung zur Desinfektion von Wasser durch UV-Strahlung nach einem der Ansprüche 1 und 2, **dadurch gekennzeichnet, dass** jeder der Abstreifringe (7) mit elastischen Rückholmitteln (73) zusammenwirkt, die bestrebt sind, den Abstreifring (7) auf der Hülle (32) zu verengen.

4. Vorrichtung zur Desinfektion von Wasser durch UV-Strahlung nach Anspruch 3, **dadurch gekennzeichnet, dass** die elastischen Rückholmittel (73) mindestens eine Ringfeder umfassen.

5. Vorrichtung zur Desinfektion von Wasser durch UV-Strahlung nach einem der Ansprüche 3 und 4, **dadurch gekennzeichnet, dass** die elastischen Rückholmittel (73) in der äußeren Umfangsnut (74) des Abstreifrings (7) aufgenommen sind.

6. Vorrichtung zur Desinfektion von Wasser durch UV-Strahlung nach einem der Ansprüche 3 und 4, **dadurch gekennzeichnet, dass** die elastischen Rückholmittel (73) in den Abstreifring (7) eingebettet sind.

7. Vorrichtung zur Desinfektion von Wasser durch UV-Strahlung nach einem der Ansprüche 2 bis 6, **dadurch gekennzeichnet, dass** die Umfangsnut (74) und/oder der Ring derart relativ zueinander dimensioniert sind, dass ein Spiel zwischen dem Halter (41) und den Innenseiten der Umfangsnut (74) ausgebildet ist.

8. Vorrichtung zur Desinfektion von Wasser durch UV-Strahlung nach einem der Ansprüche 2 bis 6, **dadurch gekennzeichnet, dass** die Nut (74) mit einer solchen Tiefe bemessen ist, dass ein ringförmiges Spiel zwischen dem Ring einerseits und dem Boden der Nut (74) und/oder den elastischen Rückholmitteln (73) andererseits ausgebildet ist.

9. Vorrichtung zur Desinfektion von Wasser durch UV-Strahlung nach einem der Ansprüche 1 bis 8, **dadurch gekennzeichnet, dass** die Antriebseinheit oder die Antriebseinheiten jeweils mindestens zwei Antriebsarme (42) umfassen, zwischen denen sich mehrere Ringe erstrecken, die quer mindestens zu zweit zwischen den Armen (42) angeordnet sind.

10. Antriebselement zur Bestückung einer Vorrichtung zur Desinfektion von Wasser durch UV-Strahlung, die mehrere UV-Lampen (31) aufweist, welche jeweils durch mindestens eine Hülle (32) aus UV-durchlässigem Material von im Wesentlichen zylindrischer Form geschützt sind, wobei die Vorrichtung Mittel zur Reinigung der Hüllen umfasst, die mindestens einen Abstreifring (7) aufweisen, der die jeweilige Hülle (32) umgibt und einen Spalt (72) aufweist, der es ermöglicht, seine Geometrie zu verändern, wobei das Antriebselement dazu bestimmt ist, den oder die Abstreifringe (7) mit Hilfe motorischer Mittel (5) entlang der Hülle (32) gleitend anzutreiben, **dadurch gekennzeichnet, dass** es in Form einer einstückigen Einheit ausgebildet ist, welche aufweist:
- Haltemittel (41) jedes der Abstreifringe (7), die mindestens einen geschlossenen Ring umfassen, in dessen Inneren der Abstreifring (7) angebracht ist;
- mindestens einen Antriebsarm (42), der die Haltemittel mit den motorischen Mitteln (5) verbindet.

11. Verfahren zur Herstellung eines Antriebselements zur Bestückung einer Vorrichtung zur Desinfektion von Wasser durch UV-Strahlung, die mehrere UV-Lampen (31) aufweist, welche jeweils durch mindestens eine Hülle (32) aus UV-durchlässigem Material von im Wesentlichen zylindrischer Form geschützt sind, wobei die Vorrichtung Mittel zur Reinigung der Hüllen (32) umfasst, die mindestens einen Abstreifring (7) aufweisen, der die jeweilige Hülle (32) umgibt und einen Spalt (72) aufweist, der es ermöglicht, seine Geometrie zu verändern, wobei das Antriebselement dazu bestimmt ist, den oder die Abstreifringe (7) mit Hilfe motorischer Mittel (5) entlang der Hülle (32) gleitend anzutreiben, **dadurch gekennzeichnet, dass** es mindestens einen Schritt der Herstellung einer einstückigen Einheit umfasst, welche aufweist:
- Haltemittel (41) jedes der Abstreifringe (7), die mindestens einen geschlossenen Ring umfassen, in dessen Inneren der Abstreifring (7) angebracht ist;
- mindestens einen Antriebsarm (42), der dazu bestimmt ist, die Haltemittel (41) mit den motorischen Mitteln (5) zu verbinden,
wobei der Schritt der Herstellung mit Hilfe mindestens eines der folgenden Verfahren durchgeführt wird:
- Schneiden;
- Gießen;
- Biegen;
- Tiefziehen;
- Warmformen.
